# EUROPEAN PATENT SPECIFICATION

(11) **EP 0 485 602 B1**
(45) Date of publication and mention of the grant of the patent: **12.04.1995**
(21) Application number: 90908667.0
(22) Date of filing: 30.05.1990
(51) Int. Cl.: B60R 21/16

(54) **AIR BAG IN AIR BAG UNIT**
LUFTSACK IN LUFTSACKEINRICHTUNG
COUSSIN PNEUMATIQUE GONFLABLE POUR INSTALLATION DE SECURITE ANTI-COLLISION

(43) Date of publication of application: 20.05.1992
(73) Proprietor: TAKATA KABUSHIKI KAISHA, Minato-ku, Tokyo 106 (JP)
(72) Inventor: NAKAYAMA, Yoshikazu 477-26, Inabe-cho, Shiga 521-11 (JP)
(74) Representative: Bubb, Antony John Allen
(86) International application number: JP9000700
(87) International publication number: WO9118765

(56) References cited:
- JP-B- 6 344 098
- JP-U-52 119 234
- JP-Y- 5 756 923
- US-A- 3 810 523

## Description

The present invention relates to an air bag unit for protecting an occupant in a vehicle by inflating an air bag by high pressure gas when the vehicle is collided.

In particular the invention concerns an air bag, of which a mounting base is squeezed between an air bag support member and a ring member, said air bag being inflatable by gas supplied from an inflator operating in an emergency. Such an air bag is known from US-A-3,810,523. From JP-B2-63-44098 there is also known an air bag unit wherein a mounting base of the air bag is bonded to the peripheral areas and the fittings.

An air bag unit is usually installed on a fixed portion of a car body in front of a seat of a vehicle, and it plays an important role for protecting an occupant from injury caused by collision against the car body in an emergency such as a vehicle collision as it is inflated by pressure of reaction gas released from an inflator, which is fixed on the steering wheel or dashboard.

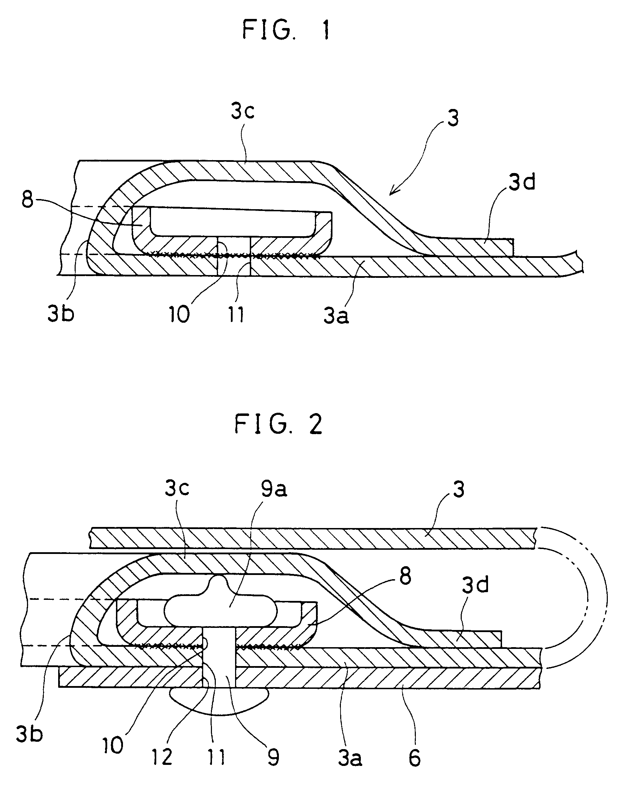

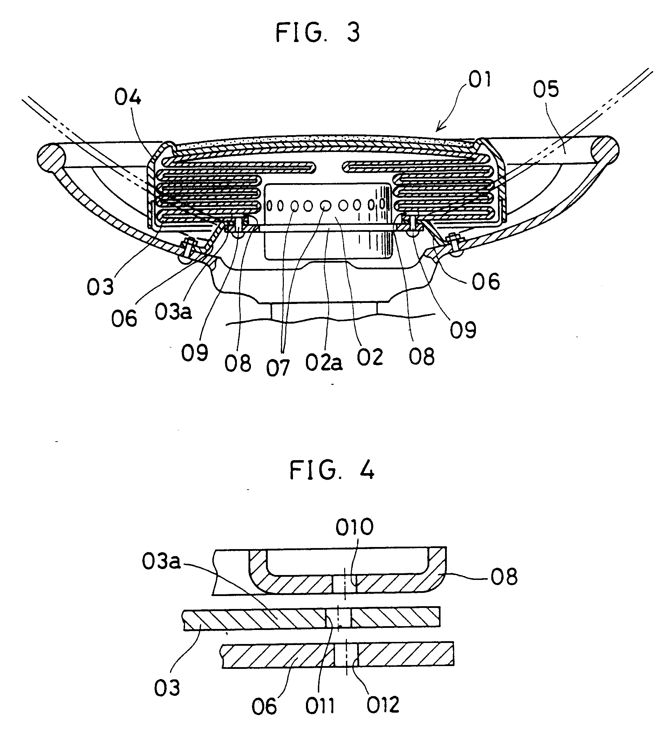

Figure 3 shows another common example of such conventional type of air bag unit.

As shown in Figure 3, an air bag unit 01 comprises an inflator 02, which releases gas when gas generating agent is exploded by a collision signal from a collision detecting sensor (not shown) when deceleration of the vehicle exceeds a certain level, and an air bag 03, of which a mounting base 03a is fixed with respect to the inflator 02 and which is inflated by gas blown out of the inflator 02.

With the air bag 03 folded up and accommodated in a pad 04, this air bag unit 01 is mounted on a fixed portion of car body such as central portion of steering wheel through a support member 06.

When the vehicle is collided, gas generating agent in the inflator 02 reacts immediately, and the generated gas is blown out into the air bag 03 through a gas outlet 07 of the inflator 02. As the result, the air bag 03 is instantaneously inflated and expanded as shown by two-dot chain line in Fig. 3. The air bag 03 thus inflated and expanded receives the occupant, who is pushed forward by inertia, and protects the occupant from the collision against car body.

Because pulling force caused by the pressure of reaction gas and inertia of the occupant is applied on the air bag 03 when it is inflated, it is necessary to considerably increase the mounting strength of the air bag 03 to mount it on a support member 06.

For this purpose, in the conventional type air bag unit 01, a mounting base 03a of the air bag 03 is placed between the support member 06 and a ring-like hardware 08 so that a flange unit 02a of the inflator 02, the support member 06, the ring-like hardware 08 and the mounting base 03a of the air bag 03 are squeezed by tightening force of a proper fastener such as blind rivet, bolt, etc. Thus, the mounting base 03a of the air bag 03 is supported sturdily and uniformly over the entire area by the ring-like hardware 08.

To mount the air bag 03, the air bag mounting base 03a and the ring-like hardware 08 are overlapped on the support member 06, and after aligning fastener insertion holes on each of components 02a, 03, 06 and 08, it is fastened by inserting the fastener 09.

However, if position aligning has to be made for each of the insertion holes each time the air bag 03 is mounted, much work is required for such procedure. Especially, because the air bag 03 is formed by flexible material, the mounting base 03a is easily bent and flexed as shown in Fig. 4. As the result, relative positions of holes 010, 011, and 012 tend to be deviated, and much work is required for aligning the positions of these holes. If the positions of the holes are not accurately aligned, it is difficult to insert the fastener 09, and much more work is needed for mounting the air bag.

To eliminate the above disadvantages, the object of the present invention is to offer an air bag, which can be easily and sturdily mounted.

The air bag of the present invention is characterised in that said air bag is fixedly bonded at its base to said air bag ring member forming an inflatable air bag around an outer periphery of said ring member, said air bag mounting base extending inwardly of an inner periphery of said ring member and being folded inwardly and backwardly across a top of said ring member, an end portion of said inwardly folded air bag mounting base being fixed to the inner surface of said air bag outwardly of the outer periphery of said ring member.
Figure 1 is a partial enlarged view of a portion near the mounting base of an embodiment of an air bag according to the present invention;
Figure 2 is a partial enlarged view of the portion near air bag mounting base showing the mounting condition of this air bag;
Figure 3 is a cross-sectional view of a conventional type air bag unit when it is mounted on steering wheel; and
Figure 4 is a partial and disassembled enlarged view of the portion near the air bag mounting base of a conventional air bag unit.

As shown in Fig. 1, a ring-like hardware 8 is bonded on a mounting base 3a of an air bag 3 by bonding or welding. The mounting base 3a and the ring-like hardware 8 are provided with holes 10 and 11 at the corresponding positions. In this case, the ring-like hardware 8 is furnished with a hole 10, and after this ring-like hardware 8 is bonded to the mounting base 3a of the air bag 3, the hole 11 is provided at the position of the mounting base 3a, which corresponds to the hole 10 of the ring-like hardware 8.

The portion of the air bag 3 closer to the opening 3b for insertion inflator as seen from the hole 11 is folded back as if it covers the ring-like hardware. The end 3d of the folded sector 3c is fixed on a portion of the air bag 3 opposite to the opening 3b for inflator insertion with respect to the hole 11 of the air bag 3 by sewing, bonding or welding.

To mount the air bag 3 with such arrangement on car body, a support member 6 is mounted on a fixed portion of car body such as steering wheel, and a ring-like hardware 8 is overlapped on the support member 6 so that the air bag mounting base 3a comes between the support member 6 and the ring-like hardware 8, and the hole 12 of the support member 6 is aligned with the hole 10 of the ring-like hardware 8. In this case, the air bag mounting base 3a is bonded to the ring-like hardware 8, and the hole 11 of the air bag mounting base 3a is automatically aligned when the hole 12 of the support member 6 is aligned with the hole 10 of the ring-like hardware 8. Therefore, there is no need to align the position of the hole 11 of the air bag mounting base 3a, and the working procedure can be simplified.

Under the condition where the hole 12 of the support member 6 is aligned with the hole 10 of the ring-like hardware 8, a blind rivet 9 is inserted through these holes 10, 11 and 12. Then, the tip 9a of the blind rivet 9 is caulked. In so doing, the rivet 9 tightens the support member 6, the air bag mounting base 3a and the ring-like hardware 8 together, and the air bag 3 is secured on the support member 6 tightly. In this case, the support member 6 constitutes the air bag support member of the invention in the present embodiment.

On the other hand, the caulked tip portion 9a of the blind rivet 9 is perfectly covered by the folded sector 3c of the air bag 3. Accordingly, there is no chance that the caulked tip portion of the blind rivet 9 directly touches the portion of the air bag 3 other than the folded sector 3c. Thus, the air bag 3 is prevented from damage. Supposing that the folded sector 3c of the air bag 3 is damaged by the caulked tip portion 9a of the rivet 9, the function of the air bag 3 is not impaired because the folded sector 3c is not related to the strength of the air bag 3 itself or to the mounting strength of the air bag 3.

Because the folded sector 3c of the air bag 3 encloses the ring-like hardware 8, pulling force generated on the air bag 3 when the air bag is inflated is received by the entire ring-like hardware 8. Therefore, the substantial breaking strength of the air bag 3 is increased, and the mounting strength of the air bag 3 is further increased.

The present invention is not limited to the above embodiment, and various improvements and modifications are conceivable.

For example, the mounting base 3a of the air bag 3 is mounted on the support member 6 in the above embodiment, whereas it may be mounted on a mounting flange unit 2a of the inflator 2. In this case, the mounting flange unit 2a constitutes the air bag support member of this invention.

Also, the ring-like hardware 8 can be formed as a plurality of disassembled pieces. In this case, however, the number of the bonding steps of the ring-like hardware 8 on the air bag 3 is increased. Thus, it is desirable that the ring-like hardware 8 is provided in one piece.

Further, the blind rivet 9 is used in the above embodiment, whereas bolts and nuts may be used instead. In this case, nut should be bonded on the ring-like hardware 8 in advance.

### INDUSTRIAL APPLICABILITY

The air bag in an air bag unit according to the present invention can be used on a vehicle and applied for the purpose of protecting the occupant by absorbing the shock which occurs when the vehicle is collided.

## Claims

1. An air bag (3) for use in an air bag unit, comprising an air bag mounting base (3a) squeezed between an air bag support member (6) and a ring member (8), said air bag (3) being inflatable by gas supplied from an inflator operating in an emergency, characterized in that:
said air bag (3) is fixedly bonded at its base to said air bag ring member (8) forming an inflatable air bag around on outer periphery of said ring member (8), said air bag mounting base (3a) extending inwardly of an inner periphery of said ring member (8) and being folded inwardly and backwardly across a top of said ring member (8), an end portion (3d) of said inwardly folded air bag mounting base (3a) being fixed to the inner surface of said air bag (3) outwardly of the outer periphery of said ring member (8).

## Patentansprüche

1. Luftsack (3) zur Verwendung in einer Luftsackeinrichtung, umfassend eine Luftsackmontagebasis (3a), die zwischen einem Luftsackstützteil (6) und einem Ringteil (8) verklemmt ist, wobei der Luftsack durch Gas aufblasbar ist, welches von einer im Falle eines Unfalls betätigten Aufblasvorrichtung geliefert wird, dadurch gekennzeichnet, daß der Luftsack (3) an seiner Basis fest mit dem Luftsackringteil (8) verbunden ist unter Bildung eines aufblasbaren Luftsacks rund um einen Außenumfang des Ringteils (8), daß die Luftsackmontagebasis (3a) nach innen und rückwärts über die Oberseite des Ringteils (8) gebogen ist, wobei ein Endabschnitt (3d) der angesprochenen nach innen gebogenen Luftsackmontagebasis (3a) an der Innenfläche des Luftsacks (3) außerhalb des Außenumfangs des Ringteils (8) befestigt ist.

## Revendications

1. Coussin pneumatique, ou air bag, (3) à utiliser dans un dispositif à coussin pneumatique comprenant une base de montage (3a) de coussin pneumatique, serrée entre un élément d'appui (6) du coussin pneumatique et une pièce annulaire (8), le coussin pneumatique (3) pouvant être gonflé par un gaz fourni par un insufflateur entrant en action en cas d'urgence, caractérisé en ce que le coussin pneumatique (3) est assujetti de manière fixe, au niveau de sa base, à la pièce annulaire (8) du coussin pneumatique de façon à former un coussin pneumatique gonflable autour de la périphérie extérieure de la pièce annulaire (8), ladite base de montage (3a) du coussin pneumatique s'étendant à l'intérieur d'une périphérie intérieure de l'organe annulaire (8) et étant repliée vers l'intérieur et en arrière par-dessus une partie haute de la pièce annulaire (8), et une partie terminale (3d) de la base de montage (3a), repliée vers l'intérieur, étant fixée à la surface intérieure du coussin pneumatique (3) à l'extérieur de la périphérie extérieure de la pièce annulaire (8).
